# EUROPÄISCHE PATENTSCHRIFT

(11) **EP 0 406 571 B1**
(45) Veröffentlichungstag und Bekanntmachung des Hinweises auf die Patenterteilung: **01.09.1993**
(21) Anmeldenummer: 90110562.7
(22) Anmeldetag: 05.06.1990
(51) Int. Cl.: F16H 7/08

(54) **Spannvorrichtung für Ketten- oder Riementriebe**
Tensioning device for chain or belt drives
Tendeur pour transmissions à chaîne ou à courroie

(30) Priorität: 05.07.1989 DE 3922037
(43) Veröffentlichungstag der Anmeldung: 09.01.1991
(73) Patentinhaber: INA Wälzlager Schaeffler KG, 91063 Herzogenaurach (DE)
(72) Erfinder: Schmidt, Dieter, D-8500 Nürnberg (DE); Schuseil, Bolko, D-8520 Erlangen (DE)

(56) Entgegenhaltungen:
- EP-A- 0 266 565
- GB-A- 2 122 685
- GB-A- 2 155 584

## Beschreibung

Die Erfindung betrifft eine Spannvorrichtung für Ketten- oder Riementriebe mit den im Oberbegriff von Anspruch 1 aufgeführten Merkmalen.

Eine solche nach dem Leckspaltprinzip arbeitende Spannvorrichtung ist aus der EP-A 02 66 565 bekannt. Dabei hängt das Dämpfungsverhalten des als Druckflüssigkeit verwendeten Öles im Hochdruckraum des Gehäuses von dessen mit der Temperatur veränderlicher dynamischen Zähigkeit (Viskosität) ab. Der Dämpfungsfaktor dieser Spannvorrichtung ist so ausgelegt, daß das optimale dynamische Verhalten des Ketten- oder Riementriebs im üblichen Betriebszustand erzielt wird, wenn die Öltemperatur ungefähr 100 bis 135°C beträgt. Mit der Abkühlung auf niedrigere Öltemperaturen wächst die dynamische Zähigkeit des Öles an, so daß der Dämpfer ein entsprechend härteres Verhalten zeigt. Dabei können Geräuschentwicklungen und Verschleiß an den Spannschienen und Übertragungselementen des Triebes die unmittelbare Folge sein.

Der Erfindung liegt die Aufgabe zugrunde, die gattungsgemäße Spannvorrichtung so zu verbessern, daß sie über einen großen Temperaturbereich ein gleichmäßiges, von Ölzähigkeitsunterchieden weitgehend unabhängiges Verhalten aufweist.

Diese Aufgabe wird erfindungsgemäß durch die Merkmale des Anspruchs 1 gelöst.

Auf diese Weise kann sich bei Lastüberhöhungen, wie sie infolge von niedrigen Temperaturen und damit verbundenen hohen Zähigkeiten der Druckflüssigkeit auftreten, der Überdruckkolben in einer das Volumen des Hochdruckraums vergrößernden Richtung bewegen, so daß die Bewegung des Dämpfungskolbens weiter in das Gehäuse hinein erleichtert wird. Eine solche Bewegung des Überdruckkolbens erfolgt erst von einer bestimmten Belastungshöhe an, wenn die von der Druckflüssigkeit auf den Überdruckkolben ausgeübte Kraft größer als die Kraft der zweiten Druckfeder ist. Der Überdruckkolben verhindert also durch seine von einem bestimmten Belastungsniveau an wirksam werdende Ausgleichsfunktion, daß zu hohe Kräfte in dem Ketten- oder Riementrieb auftreten und er gewährleistet dabei gleichzeitig die Einhaltung eines bestimmten Druckniveaus im Hochdruckraum. Auf diese Weise werden Druckpulsationen und die damit verbundenen negativen Auswirkungen auf das dynamische Verhalten der Spannvorrichtung, wie sie häufig mit Druckentlastungsventilen auftreten würden, vermieden. In vorteilhafter Weise kann der Überdruckkolben in dem Gehäuse axial verschiebbar angeordnet sein, so daß das Gehäuse einen einfachen kreiszylindrischen Aufbau erhalten kann. Auch die zweite Druckfeder kann dabei in dem Gehäuse angeordnet werden. Bei einer bevorzugten Ausführung ist die zweite Druckfeder zwischen dem Überdruckkolben und dem Dämpfungskolben angeordnet.

Um die Elementenlänge der Spannvorrichtung für den Einbau des Überdruckkolbens nicht vergrößern und dabei auf das vollständige Volumen des Hochdruckraums und des Ölvorratsraums nicht verzichten zu brauchen, ist es vorteilhaft, daß die zweite Druckfeder und der Überdruckkolben in einer Bohrung des Dämpfungskolbens angeordnet sind, welche mit dem Überdruckkolben einen den Hochdruckraum zu dem Ölvorratsraum öffnenden zweiten Leckspalt bildet. Der Überdruckkolben ist damit in den Dämpfungskolben integriert, so daß sich eine besonders kompakte Bauweise ergibt.

Dabei kann das Rückschlagventil vorteilhaft an dem Überdruckkolben angeordnet sein, so daß sich ein besonderes Bauelement für den Ventilsitz erübrigt. Die Funktion des Ventilsitzes übernimmt der Überdruckkolben.

In den Dämpfungskolben kann in eine von dessen Bohrung ausgehende Ringnut ein Anschlagring für den Überdruckkolben eingesetzt sein. Damit ist in einfacher Weise die eine Endstellung des Überdruckkolbens innerhalb des Dämpfungskolbens festgelegt.

Ein Ausführungsbeispiel der Erfindung ist in der Zeichnung dargestellt und wird im folgenden näher beschrieben. Es zeigen:
- Fig. 1: einen Längsschnitt durch den links von der Mittellinie befindlichen Teil einer Spannvorrichtung in der Arbeitsstellung bei normaler Betriebstemperatur;
- Fig. 2: einen Längsschnitt durch den rechts von der Mittellinie befindlichen Teil der Spannvorrichtung in der Arbeitsstellung bei Lastüberhöhung.

In einem Gehäuse 1 in der Form eines Kreiszylinders, das an seinem einen Ende durch einen Boden 2 stirnseitig verschlossen ist, ist ein Dämpfungskolben 3 axial verschiebbar angeordnet. An seinem von dem Boden 2 abgewandten Ende ragt der Dämpfungskolben 3 aus dem Gehäuse 1 heraus und bildet hier eine Anlagefläche für die zu spannende Kettenspannschiene oder das zu spannende Ketten- oder Riemenspannrad. Das in dem Gehäuse 1 befindliche Ende des Dämpfungskolbens 3 ist stirnseitig an einer ersten Druckfeder 4 abgestützt, die sich als zylindrische Schraubenfeder in dem Gehäuse 1 befindet und sich mit ihrem anderen Ende an dem Boden 2 abstützt.

Der Dämpfungskolben 3 ist als Hohlkörper ausgeführt und weist einen Ölvorratsraum 5 auf, der über eine radiale Öffnung 6, einen zwischen dem Dämpfungskolben 3 und dem Gehäuse 1 hier gebildeten Ringraum und einen Öldruckanschluß 7 als radiale Öffnung des Gehäuses 1 mit Öl gefüllt werden kann. Dieser Ölvorratsraum 5 in dem Dämpfungskolben 3 ist durch ein Rückschlagventil 8 von einem Hochdruckraum 9 getrennt, der von dem Gehäuse 1 auf der axialen Länge gebildet wird, in der sich der Dämpfungskolben 3 nicht befindet.

Erfindungsgemäß wird der Hochdruckraum 9 von einem Überdruckkolben 10 begrenzt, der sich im Ausführungsbeispiel in einer axialen Bohrung 11 befindet, die von dem innerhalb des Gehäuses 1 befindlichen stirnseitigen Ende des Dämpfungskolbens 3 ausgeht. Eine in der Bohrung 11 des Dämpfungskolbens 3 angeordnete zweite Druckfeder 12 wirkt auf den Überdruckkolben 10 in Richtung auf den Hochdruckkraum 9 des Gehäuses 1 ein. Die zweite Druckfeder 12 ist ebenso, wie die erste Druckfeder 4, eine zylindrische Schraubenfeder, ihre Federkraft ist größer, als die Federkraft der ersten Druckfeder 4.

Der Überdruckkolben 10 wird in seiner dem Hochdruckraum 9 nahen Endstellung von einem Anschlagring 13 gehalten, der in eine von der Bohrung 11 des Dämpfungskolbens 3 ausgehende kreisringförmige Nut eingesetzt ist. Seine andere, von dem Hochdruckraum 9 fernere Endstellung wird von der zweiten Druckfeder 12 bestimmt, wenn diese auf ihre Blocklänge zusammengedrückt ist.

Der Hochdruckraum 9 ist auf diese Weise zu dem Ölvorratsraum 5 hin nicht nur über einen Leckspalt 14 geöffnet, der von der Führungsbohrung 15 des Gehäuses 1 und der äußeren Oberfläche des Dämpfungskolbens 3 gebildet wird, sondern es besteht auch zwischen der Bohrung 11 des Dämpfungskolbens 3 und dem Überdruckkolben 10 ein zweiter Leckspalt 16, durch den bei der Bewegung des Dämpfungskolbens 3 weiter in das Gehäuse 1 Öl aus dem Hochdruckraum 9 in den Ölvorratsraum 5 hindurchströmen kann, wobei die Flüssigkeitsreibung die Dämpfung der Kolbenbewegung bewirkt.

Der Überdruckkolben 10 ist Träger des Ventilsitzes für das Rückschlagventil 8. Dieses ist so ausgebildet, daß es bei einer Bewegung des Überdruckkolbens 10 zum Hochdruckraum 9 hin geschlossen ist, während es bei einer Bewegung in der entgegengesetzten Richtung geöffnet sein kann. Eine Ventilkugel als Absperrorgan liegt an der zum Hochdruckkraum 9 weisenden Seite des Überdruckkolbens 10 am Ventilsitz an.

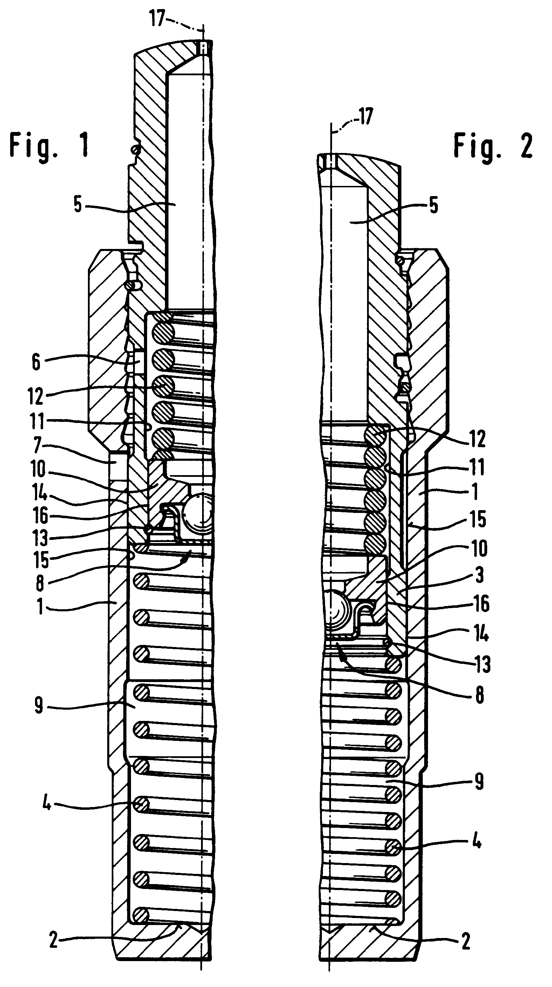

Wenn die Betriebstemperatur von ungefähr 100 bis 135° C erreicht ist, nimmt der Überdruckkolben 10 in dem Dämpfungskolben 3 seine dem Hochdruckraum 9 nahe Endstellung ein, er liegt also an dem Anschlagring 13 an, wie das in Figur 1 der Zeichnung links von der Mittellinie 17 dargestellt ist. In dieser Stellung wird der Überdruckkolben 10 von der zweiten Druckfeder 12 gehalten. Die Kraft der zweiten Druckfeder 12 ist so groß, daß sich der Überdruckkolben 10 bei den auftretenden betriebsbedingten Druckschwankungen in dem Hochdruckraum 9 nicht von dem Anschlagring 13 löst. Er bewegt sich also genauso, wie der Dämpfungskolben 3.

Wenn jedoch die Betriebstemperatur noch nicht erreicht ist, so daß die Zähigkeit des Drucköls im Hochdruckraum 9 wesentlich höher als im Betriebszustand ist, ergibt sich eine größere Flüssigkeitsreibung in den Leckspalten 14 und 16, wenn der Dämpfungskolben 3 in das Gehäuse 1 hineingedrückt wird. Infolge dieser größeren Reibungskräfte und des dadurch bedingten höheren Druckes im Hochdruckraum 9 wird der Überdruckkolben 10 entgegen der Wirkung der Kraft der zweiten Druckfeder 12 weiter in die Bohrung 11 des Dämpfungskolbens 3 hinein verschoben, so daß das Volumen des Hochdruckraums 9 sich auf diese Weise vergrößert und der Druck hier abgebaut wird. Die Bewegung des Überdruckkolbens 10 ist so lange möglich, bis die Windungen der zweiten Druckfeder 12 aneinander liegen, wenn die zweite Druckfeder 12 also, wie in Figur 2 dargestellt, auf ihre Blocklänge zusammengedrückt ist.

Der Überdruckkolben 10 führt somit im Betriebstemperaturbereich während der dynamischen Beanspruchung keine Relativbewegung im Dämpfungskolben 3 aus, erst bei Lastüberhöhungen, wie sie bei niedrigen Temperaturen und der damit gegebenen hohen Zähigkeit des Öls entstehen, bewegt sich der Überdruckkolben 10 invers zu dem Dämpfungskolben 3. Diese Bewegung erfolgt von einer bestimmten Belastungshöhe an, welche von der Kraft der zweiten Druckfeder 12 abhängig ist.

Mit der Erfindung ist außerdem der Vorteil erzielbar, daß die in bestimmten Resonanzpunkten des Motordrehzahlbereichs auftretenden Belastungsspitzen und die daraus resultierenden negativen Auswirkungen, wie Geräuschbildung und Verschleißerscheinungen, auf den Ketten- oder Riementrieb ohne wesentliche Einschränkung der dynamischen Eigenschaften der Spannvorrichtung begrenzt werden können.

## Patentansprüche

1. Spannvorrichtung für Ketten- oder Riementriebe mit einem in einem zylindrischen Gehäuse (1) geführten Dämpfungskolben (3), der von einer in dem Gehäuse befindlichen Druckfeder (4) in Kettenspannrichtung beaufschlagt ist, wobei sich zwischen dem Gehäuseboden (2) und dem Dämpfungskolben ein Hochdruckraum (9) für Druckflüssigkeit befindet, welcher über einen von der Führungsbohrung des Gehäuses und dem Dämpfungskolben gebildeten Leckspalt (14) geöffnet und gegenüber einem Ölvorratsraum (5) mit einem Rückschlagventil (8) verschlossen ist, wobei im Betrieb der Spannvorrichtung in dem Hochdruckraum der Flüssigkeitsdruck infolge von Viskositätsunterschieden im kalten Zustand größer ist, als im erwärmten Zustand, **dadurch gekennzeichnet,** daß der Hochdruckraum (9) durch einen als Überdruckkolben (10) wirkenden zusätzlichen Kolben begrenzt ist, auf den eine zweite Druckfeder (12) in Richtung zum Hochdruckraum (9) einwirkt, wobei der Überdruckkolben (10) an einen festen Anschlag (13) anlegbar ist, und daß die Federkraft der zweiten Druckfeder (12) und die wirksame Fläche des Überdruckkolbens (10) so bemessen sind, daß der Überdruckkolben (10) im kalten Zustand von der an ihm durch den Flüssigkeitsdruck erzeugten Kraft verschiebbar und im erwärmten Zustand von der zweiten Druckfeder (12) an dem festen Anschlag gehalten ist.

2. Spannvorrichtung nach Anspruch 1, **dadurch gekennzeichnet,** daß der Überdruckkolben (10) in dem Gehäuse (1) axial verschiebbar angeordnet ist.

3. Spannvorrichtung nach Anspruch 1 oder 2, **dadurch gekennzeichnet,** daß die zweite Druckfeder (12) in dem Gehäuse (1) angeordnet ist.

4. Spannvorrichtung nach Anspruch 3, **dadurch gekennzeichnet,** daß die zweite Druckfeder (12) zwischen dem Überdruckkolben (10) und dem Dämpfungskolben (3) angeordnet ist.

5. Spannvorrichtung nach einem der vorhergehenden Ansprüche, **dadurch gekennzeichnet,** daß die zweite Druckfeder (12) und der Überdruckkolben (10) in einer Bohrung (11) des Dämpfungskolbens (3) angeordnet sind, welche mit dem Überdruckkolben (10) einen den Hochdruckraum (9) zu dem Ölvorratsraum (5) öffnenden zweiten Leckspalt (16) bildet.

6. Spannvorrichtung nach einem der vorhergehenden Ansprüche, **dadurch gekennzeichnet,** daß das Rückschlagventil (8) an dem Überdruckkolben (10) angeordnet ist.

7. Spannvorrichtung nach einem der vorhergehenden Ansprüche, **dadurch gekennzeichnet,** daß in dem Dämpfungskolben (3) in eine von dessen Bohrung (11) ausgehende Ringnut ein Anschlagring (13) für den Überdruckkolben (10) eingesetzt ist.

## Claims

1. Tensioning device for chain or belt drives comprising a damping piston (3) guided in a cylindrical housing (1) and urged in the chain tensioning direction by a compression spring (4) located in the housing, a high pressure chamber (9) for pressure fluid being situated between the housing bottom (2) and the damping piston, which high pressure chamber (9) is open via a leak gap (14) formed by the guide bore of the housing and the damping piston, and closed with respect to an oil reservoir (5) by a non-return valve (8), the fluid pressure in the high pressure chamber during the operation of the tensioning device being higher in the cold state than in the heated state due to differences in viscosity, characterized in that the high pressure chamber (9) is delimited by an additional piston which acts as an overpressure piston (10) on which a second compression spring (12) acts in the direction of the high pressure chamber (9) and which can be made to bear against a fixed stop (13), the spring force of the second compression spring (12) and the effective surface of the overpressure piston (10) are dimensioned in such a way that in the cold state, the overpressure piston (10) can be displaced by the force applied to it by the fluid pressure and in the heated state, it is retained by the second compression spring (12) on the fixed stop.

2. Tensioning device according to claim 1, characterized in that the overpressure piston (10) is arranged axially displaceable in the housing (1).

3. Tensioning device according to claim 1 or 2, characterized in that the second compression spring (12) is arranged in the housing (1).

4. Tensioning device according to claim 3, characterized in that the second compression spring (12) is arranged between the overpressure piston (10) and the damping piston (3).

5. Tensioning device according to one of the preceding claims, characterized in that the second compression spring (12) and the overpressure piston (10) are arranged in a bore (11) of the damping piston (3), which bore (11), together with the overpressure piston (10), forms a secong leak gap (16) which connects the high pressure chamber (9) to the oil reservoir (5).

6. Tensioning device according to one of the preceding claims, characterized in that the non-return valve (8) is arranged on the overpressure piston (10).

7. Tensioning device according to one of the preceding claims, characterized in that a stop ring (13) for the overpressure piston (10) is inserted into the damping piston (3) and lodged in an annular groove extending from the bore (11) of the damping piston (3).

## Revendications

1. Tendeur pour transmissions à chaîne ou à courroie comprenant un piston d'amortissement (3) guidé dans un boîtier cylindrique (1) et sollicité dans le sens de la tension de la chaîne par un ressort de pression (4) qui est monté dans le boîtier, une chambre à haute pression (9) pour un fluide sous pression située entre le fond (2) du boîtier et le piston d'amortissement, ladite chambre à haute pression (9) étant ouverte par un intervalle de fuite (14) formé par l'alésage de guidage du boîtier et le piston d'amortissement, et fermée par rapport à un réservoir d'huile (5) par un clapet antiretour (8), la pression du fluide dans la chambre à haute pression pendant le fonctionnement du tendeur étant, à cause de différences de viscosité, plus élevée à l'état froid qu'à l'état échauffé, caractérisé en ce que la chambre à haute pression (9) est délimitée par un piston supplémentaire qui agit en tant que piston de surpression (10) sur lequel agit un deuxième ressort de pression (12) en direction de la chambre à haute pression (9), le piston de surpression (10) étant destiné à s'appuyer contre une butée fixe (13), et en ce que la force de pression du deuxième ressort de pression (12) et la surface efficace du piston de surpression (10) sont dimensionnées de telle sorte qu'à l'état froid, le piston de surpression (10) peut être déplacé par la force produite par la pression du fluide qui s'exerce sur lui, alors qu'à l'état échauffé, il est retenu contre la butée fixe par le deuxième ressort de pression (12).

2. Tendeur selon la revendication 1, caractérisé en ce que le piston de surpression (10) est monté axialement coulissant dans le boîtier (1).

3. Tendeur selon la revendication 1 ou 2, caractérisé en ce que le deuxième ressort de pression (12) est monté dans le boîtier (1).

4. Tendeur selon la revendication 3, caractérisé en ce que le deuxième ressort de pression (12) est monté entre le piston de surpression (10) et le piston d'amortissement (3).

5. Tendeur selon l'une des revendications précédentes, caractérisé en ce que le deuxième ressort de pression (12) et le piston de surpression (10) sont montés dans un alésage (11) du piston d'amortissement (3), ledit alésage (11) formant conjointement avec le piston de surpression (10), un deuxième intervalle de fuite (16) qui relie la chambre à haute pression (9) au réservoir d'huile (5).

6. Tendeur selon l'une des revendications précédentes, caractérisé en ce que le clapet antiretour (8) est monté sur le piston de surpression (10).

7. Tendeur selon l'une des revendications précédentes, caractérisé en ce qu'un anneau de butée (13) est inséré dans le piston d'amortissement (3) dans une rainure annulaire qui s'étend à partir de l'alésage (11) du piston d'amortissement (3).
